# EUROPEAN PATENT APPLICATION

(11) **EP 1 249 414 A2**
(43) Date of publication of application: **16.10.2002**
(21) Application number: 02252591.9
(22) Date of filing: 11.04.2002
(51) Int. Cl.: B65H 5/06

(54) **Automated teller machine**

(30) Priority: 12.04.2001 KR 2001019564
(71) Applicant: FL Technology Inc., Gangseo-gu, Seoul (KR)
(72) Inventor: Kim, Dong-gyun, Guro-gu, Seoul (KR)
(74) Representative: Exell, Jonathan Mark

(57) **Abstract**

Disclosed is an automated teller machine (ATM) configured to selectively make a driving roller (12) and a driven roller (53) which transfer banknotes along a predetermined path in the ATM come into or out of contact with each other. In the ATM, a plurality of driven rollers are rotatably installed in a cover plate (51) to make the driven rollers contact corresponding driving rollers by rotating the cover plate toward the driving rollers, or to make the driven rollers separate from the driving rollers by rotating the cover plate in the opposite direction. Thus, even if a banknote moving between a pair of a driving roller and a driven roller comes to a stop due to a jam, the banknote can be easily removed from the pair of rollers just by making the pair of rollers be spaced apart from each other. Therefore, prompt and simplified repair and maintenance are allowed and the ATM can be prevented from malfunctioning due to a banknote jam.

## Description

The present invention relates to an automated teller machine, and more particularly, to an automated teller machine (hereinafter, referred to as "ATM") configured to selectively make a driving roller and a driven roller which transfer banknotes along a predetermined path in the ATM come into or out of contact with each other.

ATMs are convenient automated banking machines in widespread use which allow a user to easily withdraw or deposit money from or into his or her account anytime. An ATM is constructed such that a banknote storage cassette containing banknotes is installed at a certain location within the machine and a plurality of sets of driving rollers and driven rollers are driven to discharge banknotes stacked within the storage cassette to the outside.

The driving rollers and the driven rollers are each fixed to driving shafts and driven shafts, respectively, and parallel to and contact each other so that banknotes are allowed to move along a traveling path provided by the driving rollers and the driven rollers.

The plurality of driving shafts spaced apart from each other are supported by a frame and rotate by rotational force transferred from a motor. The driving shafts are connected to each other by power transmission mechanism such as gears or a belt. Also, the plurality of driven shafts are provided to correspond to the plurality of driving shafts in pairs and are supported by the frame.

The conventional ATM having the above-described configuration has a disadvantage that the driven rollers cannot be separated apart from the driving rollers. Thus, the banknotes are not smoothly transferred so that two or more banknotes may be overlapped, resulting in a banknote jam. In this case, it is not easy to extract the overlapped banknotes, that is, it is quite a time-consuming and bothersome task to make the ATM return to normal operation.

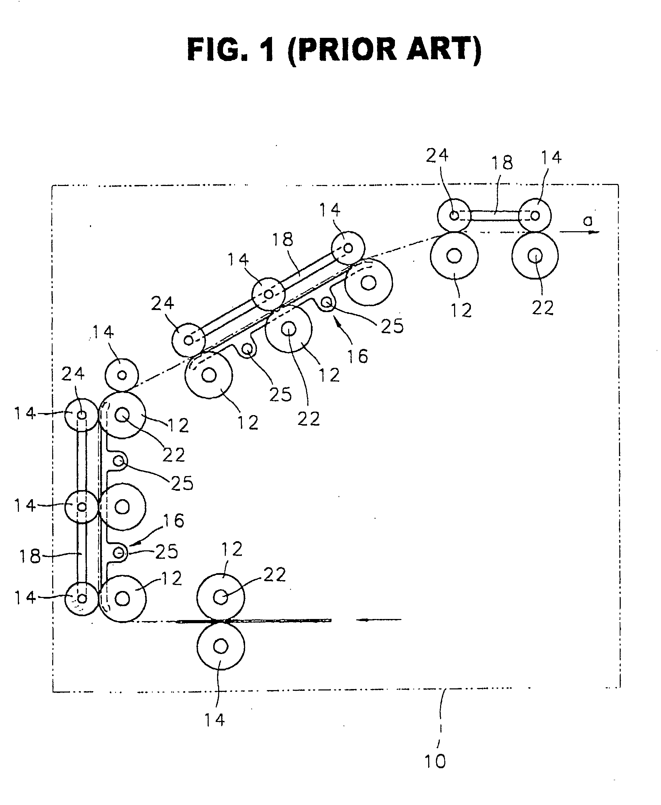

FIG. 1 is a schematic diagram illustrating a connection mechanism of driving rollers and driven rollers of a conventional ATM. As shown in FIG. 1, the ATM includes a plurality of pairs of driving and driven rollers 12 and 14 forming a transfer path along which banknotes move in a direction indicated by an arrow **a**.

The driving rollers 12 are fixed to corresponding driving shafts 22, respectively. Either end of each of the driving shafts 22 is supported to the frame 10, and the driving shafts 22 rotate the driving rollers 12 by a rotational driving force transferred from a motor (not shown).

Fixed shafts 25 may be provided between every two neighboring driving shafts 22, or may be provided between selected pairs of neighboring driving shafts 22 only as shown in FIG. 1. Both ends of each of the fixed shafts 25 are fixed to the frame 10, and the fixed shafts 25 are parallel to the driving shafts 22. A banknote guide rail 16 is supported by the fixed shaft 25. The banknote guide rail 16 provides a plane outward, that is, at a place where the driven rollers 14 are disposed, to guide movement of banknotes such that the banknotes currently moving may not escape from a normal transfer path.

The driven rollers 14 closely contact outer surfaces of the driving rollers 12 and rotate as the driving rollers 12 rotate, so that the banknotes are transferred. Each of the driven shafts 24 supporting the driven rollers 14 is supported by the frame 10 at both ends thereof. A driven roller bracket 18 is provided between each of the driven shafts 24.

Like the banknote guide rail 16, the driven roller bracket 18 also serves to guide banknotes to be transferred and prevents the banknotes from escaping from the transfer path while being transferred. The driven roller bracket 18 is fixed to the frame 10 along with the driven shaft 24.

In the conventional ATM having the above-described configuration, however, it is quite difficult to make the ATM function properly in any event where a banknote jam occurs between the banknote guide rail 16 and the driven roller bracket 18.

A gap between the banknote guide rail 16 and the driven roller bracket 18 is too small to leave a space enough to remove banknotes jammed between the banknote guide rail 16 and the driven roller bracket 18. That is, the jammed banknotes are barely removed even by using a spit or hook-shaped stick. This means that removal of the banknote jam condition is an inconvenient and bothersome work and it takes some time for the ATM to returned to normal operation.

The present invention seeks to provide an automated teller machine (ATM) configured to allow prompt and simplified repair and maintenance and to prevent the ATM from malfunctioning due to a jam such that even if a banknote moving between a pair of a driving roller and a driven roller comes to a stop due to the jam, the banknote is easily removed from the pair of rollers just by making the pair of rollers be spaced apart from each other.

According to one aspect of the present invention, there is provided an automated teller machine (ATM) including a plurality of pairs of driving rollers and driven rollers supported to a frame defining an internal space and installed in the frame to allow banknotes to be transferred in a predetermined path, wherein the respective driven rollers are installed in a cover plate rotatably installed in the frame so as to contact or separate from the corresponding driving rollers.

Roller apertures are preferably formed in the cover plate, the driven rollers may contact the driving rollers via the roller apertures, and the cover plate preferably has an elastic means for elastically supporting the driven rollers toward the driving rollers.

The driven rollers are preferably hollow rollers each having a hollow portion in its central rotation axis, and the elastic means may include roller supporting shafts each inserted into the hollow portion of the rotation axis and plate springs for supporting both ends of each roller supporting shaft and fixed to the cover plate.

Alternatively, the driven rollers are preferably hollow rollers each having a hollow portion in its central rotation axis, linear projections are preferably formed at sides of each of the roller apertures, and the elastic means includes roller supporting shafts each inserted into the hollow portion of the rotation axis and coil springs each fitted into the roller supporting shaft in a state in which it is supported to the linear projections to provide elasticity to the roller supporting shaft.

The cover plate may include an opening means for rotating the cover plate toward the driving rollers to be supported to the frame or separating the cover plate fixed to the frame to separate the driven rollers from the driving rollers.

The opening means may include a power-driven shaft supported to the cover plate so as to be axially rotatable and having both ends extending to exterior sides of the cover member, a pair of locking members each fixed to both ends of the power-driven shaft, rotating by axial rotation of the power-driven shaft, and projecting from the interior surface of the cover plate facing the driving rollers, the projecting portion having a sloping plane and a groove, a torsion spring connecting the locking members with the cover plate, and providing elasticity to the locking members so that the locking members are retained perpendicular to the cover plate, a knob fixed to the outer surface of the power-driven shaft so as to axially rotate the power-driven shaft, and a fixed shaft provided in the frame and connected to the locking members so that the cover plate rotates toward the driving rollers to be fixed to the frame.

The cover plate preferably include a vertical cover plate vertically provided at sides of the frame and rotating up and down with its upper end used as a rotation axis, and an upper cover plate provided in the upper portion of the frame and rotating with its one end used as a rotation axis.

The above objects and advantages of the present invention will become more apparent by describing in detail a preferred embodiment thereof with reference to the attached drawings in which:
FIG. 1 is a schematic diagram illustrating a connection mechanism of driving rollers and driven rollers in a conventional ATM;
FIG. 2 is a perspective view of an ATM with a driven roller supporting device according to the present invention;
FIGS. 3 and 4 are fragmentary, exploded views of a driven roller supporting means;
FIGS. 5 and 6 are fragmentary, exploded views of another driven roller supporting means;
FIG. 7 is an exploded perspective view illustrating a state in which a vertical cover plate of the ATM according to the present invention is rotated upward;
FIG. 8 is an exploded perspective view illustrating a state in which an upper cover plate of the ATM according to the present invention is rotated upward; and
FIG. 9 is a perspective view illustrating the operation of the ATM according to the present invention.

Hereinafter, the present invention will be in detail described with reference to the accompanying drawings.

It must be noted that as used herein and in the appended claims, the singular forms, "a", "an", and "the" include plural references unless the context clearly dictates otherwise.

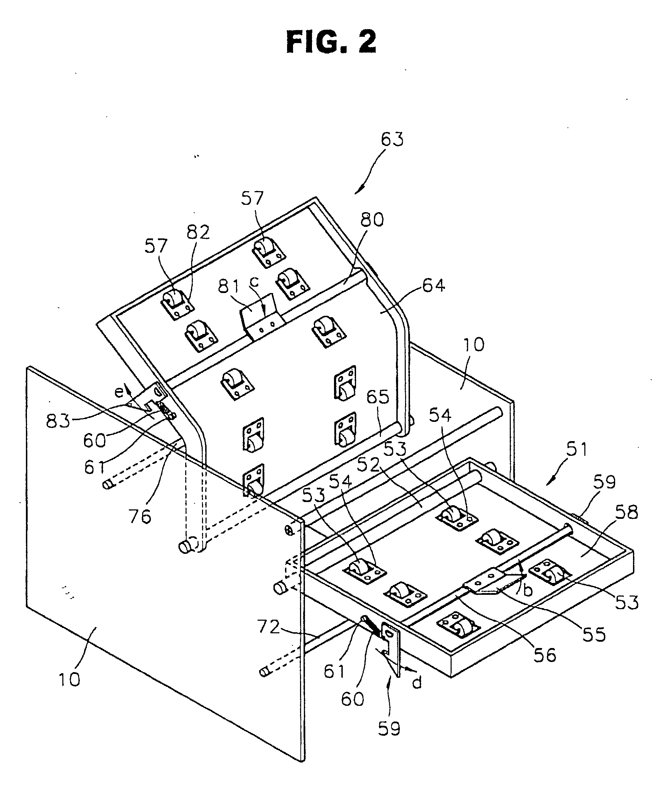

FIG. 2 is a perspective view of an ATM with a driven roller supporting device according to the present invention. Referring to FIG. 2, the driven roller supporting device according to the present invention includes a vertical cover plate 51 having a plurality of driven rollers 53 and an upper cover plate 63 having a plurality of driven rollers 57, both plates 51 and 63 being rotatable with respect to a frame 10.

The vertical cover plate 51 includes a rectangular cover member 58 for rotatably supporting the plurality of driven rollers 53, a power-driven shaft 56 provided at the cover member 58 and having both ends extending to exterior sides of the cover member 58, a knob 55 pivotally rotating the power-driven shaft 56, and an a locking member 59 fixed to both ends of the power-driven shaft 56 to be connected to a fixed shaft 72.

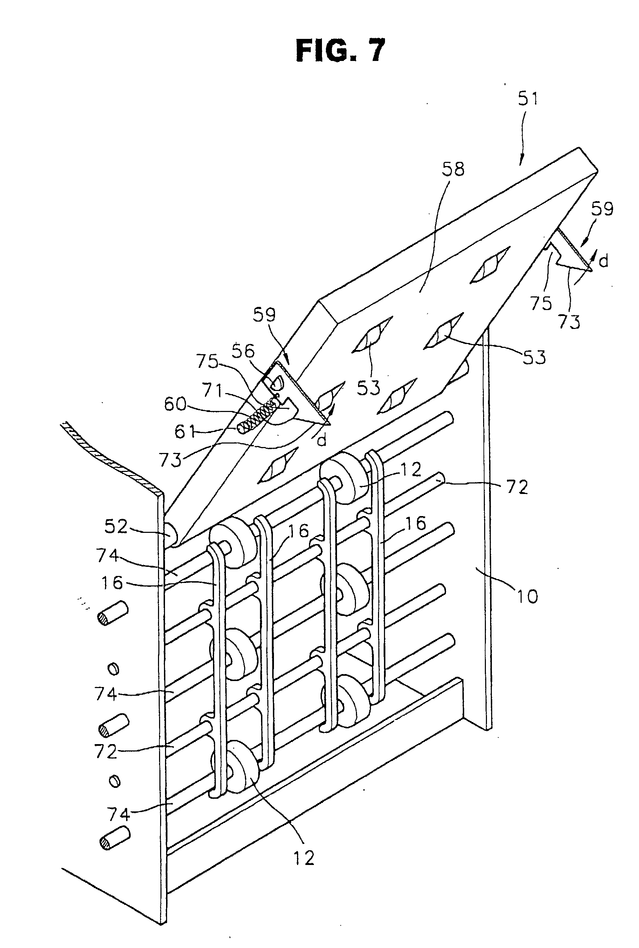

The cover member 58 has its upper end rotatably supported to the frame 10 by a supporting shaft 52. When the locking member 59 installed at both ends of the cover member 58 is connected to the fixed shaft 72, the cover member 58 stands upright. The support shaft 52 is parallel to the fixed shaft 72 and a driving shaft (74 shown in FIG. 7) to be disposed at right angle with respect to a traveling path of banknotes.

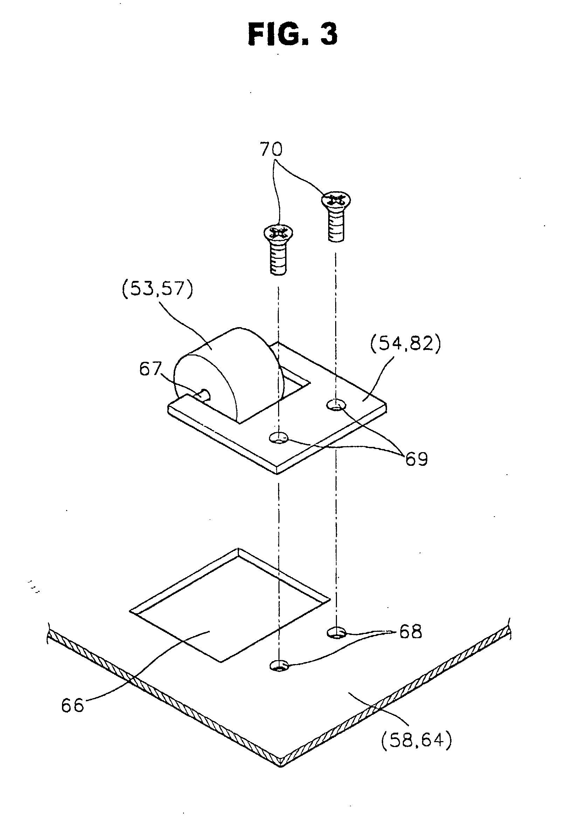

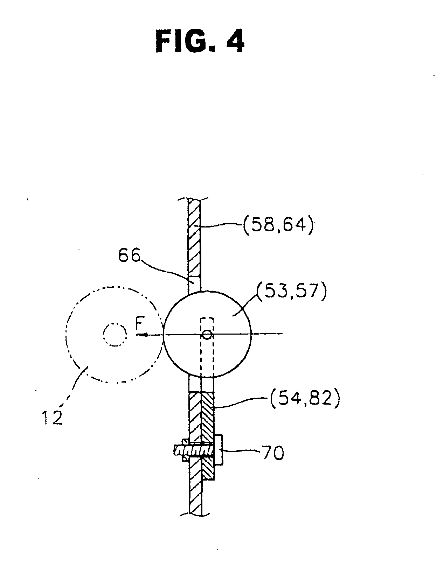

The cover member 58 has a plurality of roller apertures (66 shown in FIG. 3), and each of the driven rollers 53 is rotatably installed in each roller aperture 66. Thus, the driven roller 53 comes into contact with a driving roller (12 shown in FIG. 4) via the roller aperture 66 and rotates when the driving rollers 12 rotate. As will be described later, the driven roller 53 is elastically supported to the driving roller 12 by a plate spring 54.

The power-driven shaft 56 is parallel to the supporting shaft 52. Also, the power-driven shaft 56 has a substantially semi-circular cross-section and has the knob 55 fixed at its center. If necessary, the knob 55 is lifted in a direction indicated by an arrow **b** to pivotally rotate the power-driven shaft 56.

As the knob 55 is lifted in the direction indicated by an arrow **b**, the locking member 59 fixed to both end of the power-driven shaft 56 rotates in a direction indicated by an arrow **d** to then be connected to the cover member 58 via a torsion spring 60. The torsion spring 60 pulls the locking member 59 in a direction opposite to the arrow **d,** and has one end fixed to a supporting projection 61 formed on the lateral side of the cover member 58 and the other end connected to the locking member 59.

When the cover member 58 rotates downward to stand upright, the locking member 59 is connected to the fixed shaft 72 so that the cover member 58 is maintained at the upright standing state. Then, each of the driven rollers 53 comes into contact with each corresponding driving roller 12 to thus elastically press down the outer surface of the driving roller 12 by the action of the plate spring 54.

In order to perform such a function, the locking member 59 is provided with a sloping plane (73 shown in FIG. 7), a locking flange (71 shown in FIG. 7) and a groove (75 shown in FIG. 7). The shape of the locking member 59 will be described below.

The upper cover plate 63 provided at an upper portion of the frame 10 covers the plurality of driving rollers 12 providing a sloping transfer path upward with respect to the frame 10, and has the same shape with the vertical cover plate 51.

The upper cover plate 63 includes a cover member 64, a plurality of driven rollers 57 installed in a plurality of roller apertures 66 in the cover member 64, a power-driven shaft 80 and elastically supported to the driving rollers 12 by a plate spring 82, the power-driven shaft 80 capable of pivotally rotating at an exterior side of the cover member 64 and having both ends passing through both sides of the cover member and extending outward, and a locking member 83 provided at both ends of the power-driven shaft 80.

The cover member 64 is rotatably supported to the frame 10 by a supporting shaft 65. If the cover member 64 rotates upward, the driving roller 12 and the driven roller 57 are spaced apart from each other. Conversely, the cover member 64 rotates downward to be mounted on the frame 10, each of the driven rollers 57 comes into contact with each corresponding driving roller 12. Then, the driven roller 57 is elastically pressed down toward the driving roller 12 by the action of a plate spring 82.

The locking member 83 rotates in a direction indicated by an arrow e as the power-driven shaft 80 pivotally rotates, and is connected with a fixed shaft 76 fixed to the frame 10 so that an upper cover plate 63 is seated on the frame 10. The locking member 83 has the same shape with the locking member 59 provided in the vertical cover plate 51, and is pulled by a torsion spring 60 in a direction opposite to the arrow **e**. The torsion spring 60 connects a supporting projection 61 formed at either side of the cover member 64 with the locking member 83

A knob 81 fixed at the center of the power-driven shaft 80 rotates the locking member 80 in a direction indicated by an arrow **e**. If the knob 81 is pulled up in a direction indicated by an arrow **c**, the locking member 83 rotates in the direction indicated by arrow **e**.

As described above, as the vertical cover plate 51 and the upper cover plate 63 pivotally move with respect to the frame 10, the driven rollers 53 and 57 can be spaced apart from the driving rollers 12. Thus, even when the ATM malfunctions due to a banknote jam occurring between each of the driving rollers and the driven rollers, the malfunctioning problem can be simply solved by lifting the knobs 55 and 81.

FIGS. 3 and 4 are fragmentary, exploded views of a driven roller supporting means. Referring to FIG. 3, a rectangular throughhole is formed in each of the respective cover members 58 and 64. The throughholes, referred to as roller apertures 66 herein, are provided for bringing the driven rollers 53, 57 partially passed therethrough into contact with the driving rollers 12, and are formed widely enough to allow the driven rollers 53, 57 to rotate within the roller apertures 66.

Female screw holes 68 each having a female screw formed in its internal surface are provided at one side of each of the roller apertures 66. Screws 70 passed through the plate springs 54, 82 are inserted into the female screw holes 68. The plate springs 54, 82 rotatably supports the driven rollers 53, 74 and are made of thin metal plates having elasticity to be fixed to the cover member 58, 64 by the screws 70. To this end, throughholes 69 through which the screws 70 penetrate are formed in the plate springs 54, 82.

The driven rollers 53, 57 positioned in the roller apertures 66 are rollers each having a hollow portion in its central rotation axis. A roller supporting shaft 67 is inserted into the hollow portion of the rotation axis. The roller supporting shaft 67 is a rod having a circular section and both ends thereof are fixed to the plate springs 54, 82.

Consequently, in a state the driven rollers 53, 57 are supported to the plate springs 54, 82, they contact the driving rollers 12 through the roller apertures 66 and then elastically press down the driving rollers 12 in a direction indicated by an arrow **F**, as shown in FIG. 4.

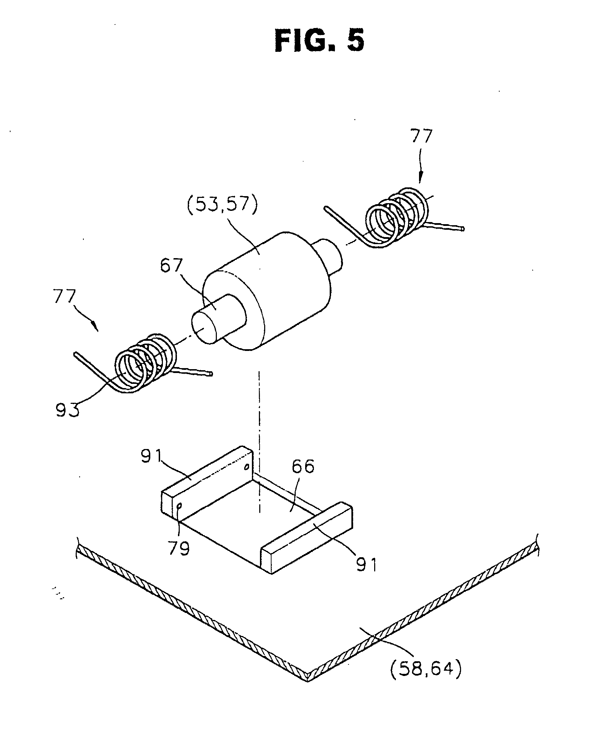

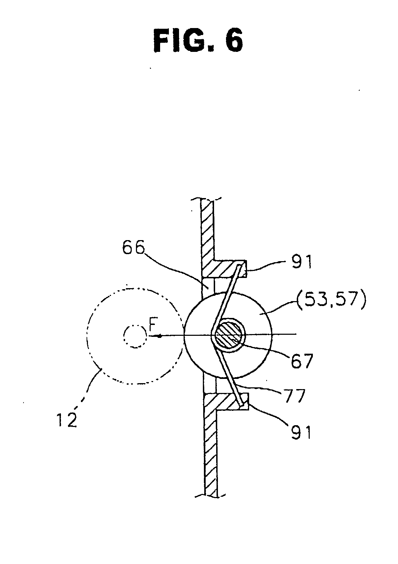

FIGS. 5 and 6 are fragmentary, exploded views of another driven roller supporting means. The same reference numerals as those shown in the above drawings denote the same functional elements.

Referring to FIG. 5, linear projections 91 having a predetermined height are formed at opposite sides of each of the roller aperture 66 formed in the cover member 58 (64). The linear projections 91 are opposite to and are parallel to each other. The linear projections 91 may also be formed at four sides of the roller aperture 66.

The linear projections 91 function to support both ends of each coil spring 77, which will be described later. To this end, two spring mounting holes 79 are formed on each of opposite sides of the linear projection 91. Ends of the coil spring 77 are fixedly inserted into the spring mounting holes 79. Then, the roller supporting shaft 67 fitted into a central coiled portion 93 of the coil spring 77 can be elastically positioned in the roller aperture 66.

The coil spring 77 is a known spring having a central coiled axis portion to form the coiled portion 93 and having both ends deflected and substantially guided into the spring mounting holes 79. The coiled portion 93 has a round, pipe-like shape and allows the roller supporting shaft 67 to penetrate into the hollow portion thereof. The coiled portion 93 and the roller supporting shaft 67 are fixed to prevent the roller supporting shaft 67 from wearing away against the coiled portion 93 (???). The roller supporting shaft 67 is fixed to the coiled portion 93 at its both ends to rotatably support the driven rollers 53, 57.

As a result, the coil spring 77 provided at both ends of each of the driven rollers 53, 57, allows the driven rollers 53, 57 to elastically contact the driving rollers 12 in the roller apertures 66.

Referring to FIG. 6, opposite ends of the coil spring 77 are supported to the linear projections 91 and the roller supporting shaft 67 is fitted into the central coiled portion. Also, the driven rollers 53, 57 supply the driving rollers 12 with elasticity by the coil spring 77 in a direction indicated by arrow **F** and contact the driving rollers 12.

FIG. 7 is an exploded perspective view illustrating a state in which a vertical cover plate 51 of the ATM according to the present invention is rotated upward. Referring to FIG. 7, a plurality of driving shafts 74 are horizontally installed in a frame 10. The respective driving shafts 74 are capable of rotating in a state in which they are supported to the frame 10. The plurality of driving shafts 74 are mutually connected by a power transmission means, such as gears (not shown) or a belt (not shown), and axially rotate at the same time.

Each two driving rollers 12 are fixed to each driving shaft 74. As the driving rollers 12 correspondingly contact driven rollers 53 provided in a vertical cover plate 51 and the driving shafts 74 rotate, banknotes are transferred upward by the driving rollers 12 in cooperation with the driven rollers 53. Fixed shafts 72 are provided between each of the driving shafts 74. The fixed shafts 72 are parallel to the driving shafts 74, and both ends of each of the fixed shafts 72 are fixed to the frame 10 so that the fixed shafts 72 do not axially rotate. The fixed shafts 72 support a plurality of banknote guide rails 16 in a vertical direction.

The banknote guide rail 16, which is known in the art, extends along a banknote transfer path and provides a plane outward. The banknote guide rail guides movement of banknotes such that the banknotes currently moving may not escape from a normal transfer path. The inward surface of the vertical cover plate 51 facing the driving rollers 12 provides a flat supporting plane, and a plurality of driven rollers 53 project therefrom. Thus, when the vertical cover plate 51 rotates downward to stand upright, the respective driven rollers 53 elastically contact the corresponding driving rollers 12 so that banknotes are allowed to pass therebetween.

The locking member 59, which is an iron piece having a predetermined thickness, is connected to the fixed shaft 72, and has a sloping plane 73, a locking flange 71 and a groove 75. The sloping plane 73 contacts the fixed shaft 72 to then be pressed down when the vertical cover plate 51 is pressed toward the fixed shaft 72.

Also, the groove 75 receives the fixed shaft 72 in a state in which the vertical cover plate 51 is completely pressed toward the fixed shaft 72. If the vertical cover plate 51 is pressed toward the fixed shaft 72, the fixed shaft 72 passes through the sloping plane 73 to then be received in the groove 75. This is possible because the locking member 59 is pulled by a torsion spring 60.

In such a state in which the fixed shaft 72 is received in the groove 75, the trailing edge of the sloping plane 73 serves as a locking flange 71 so that the fixed shaft 72 does not deviate from the groove 75 unless the locking member 59 rotates in a direction indicated by an arrow **d.**

Eventually, as the vertical cover plate 51 rotates downward, the locking member 59 is locked and supported to the fixed shaft 72 so that the vertical cover plate 51 is fixed to the frame 10.

In order to lift the vertical cover plate 51 upward, a knob 55 is lifted in a direction indicated by an arrow **b**, as shown in FIG. 2, to make the fixed shaft 72 deviate from the groove 75, and then the cover member 58 rotates upward.

In other words, in the event that a jam occurs between the vertical cover plate 51 and the driving rollers 12, a banknote jammed inside the vertical cover plate 51 can be simply eliminated by lifting the knob 55 in the direction indicated by an arrow b.

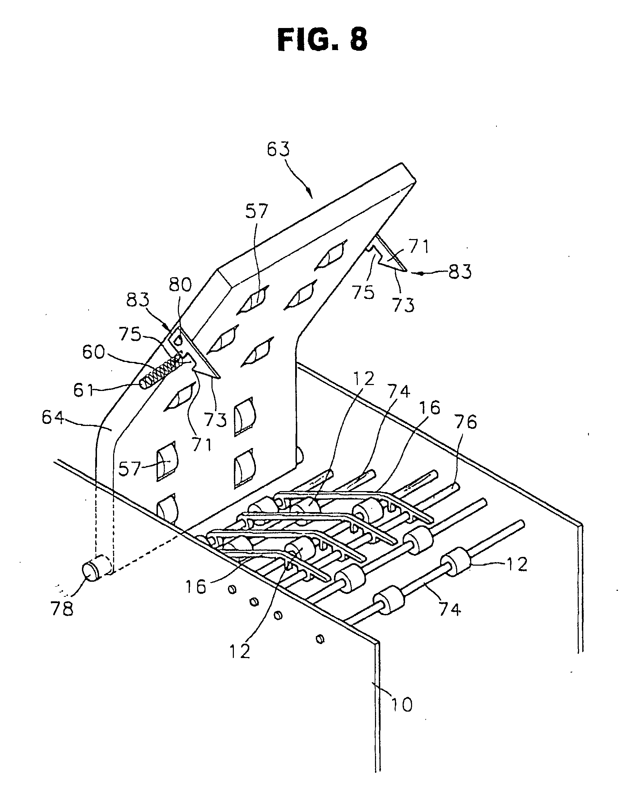

FIG. 8 is an exploded perspective view illustrating a state in which an upper cover plate 63 of the ATM according to the present invention is rotated upward. Referring to FIG. 8, a plurality of driving shafts 74 and a plurality of fixed shafts 76 are alternately provided at the upper portion of a frame 10 so as to parallel to each other. The driving shafts 74 and the fixed shafts 76 are positioned successively higher with respect to the frame 10 to form a sloping transfer path along which banknotes are transferred upward.

The driving shafts 74 are capable of rotating with respect to the frame 10, and the fixed shafts 76 each fixed to the frame 10 at both ends thereof do not rotate. The driving shafts 74 are mutually connected by a power transmission means, such as gears or a belt, and rotate at the same rotation speed by applying external power thereto.

As described above, each two driving rollers 12 are fixed to each driving shaft 74. The fixed shafts 76 fixedly support a plurality of banknote guide rails 16. The banknote guide rail 16 providing a bottom plane along which banknotes are transferred are sloping upward in a direction in which the banknotes are transferred.

The upper cover plate 63 is capable of rotating about a supporting shaft 78. A plurality of driven rollers 53 provided in a cover member 64 of the upper cover plate 63 project from the bottom plane of the cover member 64, and contact the corresponding driving rollers 12 when the upper cover plate 63 rotates downward to reach a close state.

Locking members 83 provided at both sides of the cover member 64 are fittingly connected to the fixed shaft 76, and the connection mechanism is the same as that of the locking members 59 shown in FIG. 5.

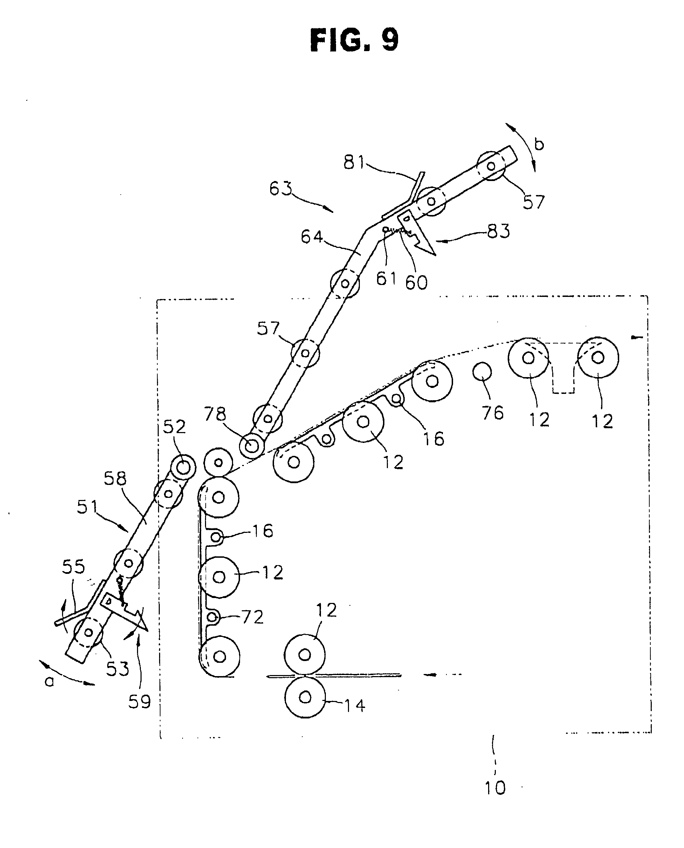

FIG. 9 is a perspective view illustrating the operation of a driven roller supporting device in the ATM according to the present invention. As shown in FIG. 9, the vertical cover plate 51 rotates in front of the driving rollers 12 arranged vertically in a direction indicated by an arrow **a**, and the upper cover plate 73 rotates in the upper portion of the frame 10 in a direction indicated by an arrow **b**. The rotation axis of the vertical cover plate 51 corresponds to the supporting shaft 52, and the rotation axis of the upper cover plate 63 corresponds to the supporting shaft 78.

The cover member 58 of the vertical cover plate 51 parallels to the banknote guide rails 16 and allows banknotes to be transferred between the cover member 58 and the banknote guide rail 16. Likewise, the bottom plane of the cover member 64 parallels to the banknote guide rails 16 and allows banknotes to be transferred between the cover member 64 and the banknote guide rail 16.

As described above, in the ATM according to this embodiment, in the case where banknotes are jammed between the banknote guide rail 16 and the vertical cover plate 51 or the upper cover plate 63 and stop moving, the knob 55 or 81 is pulled upward.

As the cover plate is lifted upward, driving rollers and driven rollers are separated from each other and a banknote transfer path is opened, so that jammed banknotes can be easily extracted. After extracting the jammed banknotes, the ATM can be actuated again just by pulling the opened vertical cover plate or the upper cover plate toward a frame to be restored into its original state.

While this invention has been particularly shown and described with reference to preferred embodiments thereof, such description is for illustrative purpose only, and it will be understood by those skilled in the art that various modifications, permutations and equivalents may be made without departing from the spirit of the invention. The scope of the invention, therefore, is to be determined solely by the appended claims.

## Claims

1. An automated teller machine (ATM) comprising a plurality of pairs of driving rollers and driven rollers supported to a frame defining an internal space and installed in the frame to allow banknotes to be transferred in a predetermined path, wherein the respective driven rollers are installed in a cover plate rotatably installed in the frame so as to contact or separate from the corresponding driving rollers.

2. An ATM as claimed in claim 1, wherein roller apertures are formed in the cover plate, the driven rollers contact the driving rollers via the roller apertures, and the cover plate has elastic means for elastically supporting the driven rollers toward the driving rollers.

3. An ATM as claimed in claim 2, wherein the driven rollers are hollow rollers each having a hollow portion in its central rotation axis, and the elastic means includes roller supporting shafts each inserted into the hollow portion of the rotation axis and plate springs for supporting both ends of each roller supporting shaft and fixed to the cover plate.

4. An ATM as claimed in claim 2, wherein the driven rollers are hollow rollers each having a hollow portion in its central rotation axis, linear projections are formed at sides of each of the roller apertures, and the elastic means includes roller supporting shafts each inserted into the hollow portion of the rotation axis and coil springs each fitted into the roller supporting shaft in a state in which it is supported to the linear projections to provide elasticity to the roller supporting shaft.

5. An ATM as claimed in any preceding claim, wherein the cover plate includes an opening means for rotating the cover plate toward the driving rollers to be supported to the frame or separating the cover plate fixed to the frame to separate the driven rollers from the driving rollers.

6. An ATM as claimed in claim 5, wherein the opening means comprises:
a power-driven shaft supported to the cover plate so as to be axially rotatable and having both ends extending to exterior sides of the cover member;
a pair of locking members each fixed to both ends of the power-driven shaft, rotating by axial rotation of the power-driven shaft, and projecting from the interior surface of the cover plate facing the driving rollers, the projecting portion having a sloping plane and a groove;
a torsion spring connecting the locking members with the cover plate, and providing elasticity to the locking members so that the locking members are retained perpendicular to the cover plate;
a knob fixed to the outer surface of the power-driven shaft so as to axially rotate the power-driven shaft; and
a fixed shaft provided in the frame and connected to the locking members so that the cover plate rotates toward the driving rollers to be fixed to the frame.

7. An ATM as claimed in any one of claims 1 through 6, wherein the cover plate includes a vertical cover plate vertically provided at sides of the frame and rotating up and down with its upper end used as a rotation axis, and an upper cover plate provided in the upper portion of the frame and rotating with its one end used as a rotation axis.
